(19) Europäisches Patentamt
European Patent Office
Office européen des brevets

(11) **EP 0 960 918 B1**

(12) **EUROPEAN PATENT SPECIFICATION**

(45) Date of publication and mention
of the grant of the patent:
**14.07.2004   Bulletin 2004/29**

(51) Int Cl.⁷: **C09D 133/12**, C08K 3/22,
C09D 127/16

(21) Application number: **99103674.0**

(22) Date of filing: **25.02.1999**

(54) **Polyvinylidene fluoride weather restistant coating compositions including polymethyl methacrylate**

Witterungsbeständige Beschichtungszusammensetzungen aus Polyvinylidenfluorid,die Polymethylmethacrylat enthalten

Compositions résistantes aux imtempéries à base de fluorure de polyvinylidène contenant du polyméthacrylate de méthyle

(84) Designated Contracting States:
**BE DE FR GB IT NL**

(30) Priority: **05.03.1998  US 35256**

(43) Date of publication of application:
**01.12.1999   Bulletin 1999/48**

(73) Proprietor: **Solvay Solexis, Inc.
Wilmington,
County of New Castle, DE 19808 (US)**

(72) Inventors:
• **Lin, Shiow-Ching
Lawrenceville, New Jersey 08648 (US)**
• **Kamsler, Craig
North Brunswick, New Jersey 08902 (US)**

• **Argasinski, Karol
Sicklerville, New Jersey 08081 (US)**

(74) Representative: **Sama, Daniele, Dr. et al
Sama Patents,
Via G.B. Morgagni, 2
20129 Milano (IT)**

(56) References cited:
**EP-A- 0 483 887          US-A- 5 132 164**

• **TOURNUT C ET AL: "COPOLYMERS OF VINYLIDENE FLUORIDE IN COATINGS" SURFACE COATINGS INTERNATIONAL, WEMBLEY, GB, vol. 78, no. 3, 1995, pages 99-100,102-103, XP000869833 ISSN: 0030-1337**

**Description**

The present invention relates to a blend comprising polyvinylidene fluoride ("PVDF") andpolymethyl methacrylate ("PMMA") comprising PMMA having a molecular weight within the range from 25,000 grams per mole to 200,000 grams per mole. The invention provides a blend with superior physical characteristics, including solvent resistance and gloss retention. Insofar as the present inventors are aware, a molecular weight range of PMMA in a PVDF/PMMA blend that results in enhanced and excellent physical characteristics, including solvent resistance and gloss retention heretofore has not been identified.

PVDF has been a very important raw material for architectural coatings based largely on its ultraviolet ("UV") light transparency. PVDF provides long term protection for metal surfaces against exterior exposure, much better than other known coating materials. In order to balance the performance of PVDF coatings, a secondary resin normally is needed to provide good adhesion to a substrate, to reduce the shrinkage of PVDF due to excess crystallization, to increase the dispersibility of a pigment in a paint, and to obtain good optical properties. The selection of the secondary resin is based largely on the compatibility of the resin with PVDF. Fortunately, PVDF has good compatibility with a few readily available industrial polymers such as acrylic resins and polyvinyl acetates.

One of the most important characteristics of PVDF coatings is excellent: weatherability. A commercial resin known as Acryloid 3-44, a copolymer of methyl methacrylate and ethyl acrylate, is commonly used in PVDF coating formulations because the resin provides excellent adhesion and mechanical behavior after mixing with PVDF. A blend of PVDF and Acryloid B-44 was selected for comparison purposes to demonstrate an aspect of the present invention. PMMA is the most compatible polymer for PVDF among acrylic resins which may be attributable to PVDF/PMMA blends having the greatest lowest critical solution temperature among PVDF/PMMA resin blends. The lowest critical solution temperature of PVDF/PMMA is above the melting point of PVDF. Hence, PMMA has been found to provide the best balance of physical properties to a PVDF/PMMA blend.

Blending polymers has been an important industrial approach towards development of polymeric coating materials. PVDF has been identified as compatible with a few industrial polymers, including polymers of alkyl methacrylate and alkyl acrylates with carbon content on alkyl groups of less than 3. The polymers compatible with PVDF have the common characteristic of high concentrations of C=O groups, particularly on side chains of the carbon polymer. It is known from the prior art that PVDF is compatible with PMMA. See, for example, U.S. Patent 4,770,939. PVDF is also known to be compatible with a blend of PMMA and polyethyl methacrylate. See, U.S. Patent 3, 454, 518. Extrusion molded products of a PVDF and PMMA thermoplastic resins are also disclosed in the art. See, U.S. Patent Nos. 4,317,860, 4,415,519 and 4,444,826.

In accordance with one aspect of the present invention, the inventors have found that a resin mixture containing a ratio of PVDF to secondary resin of about 70 to 30 by weight provides the best balance for performance of a coating. Traditionally, an acrylic resin has been the choice as a secondary resin because of its good photooxidative resistance. PMMA and PMMA polymers are often used in various PVDF paint formulations. However the technical information found in the literature usually is based on PMMA blends with PVDF, without regard to whether the structure or weight of the PMMA affects the performance characteristics of the PVDF/PMMA blend. The present invention utilizes material comprising PMMA with different molecular weights for PVDF paint characterizations which, surprisingly,affects the physical characteristics of the paint coating, including solvent resistance and gloss retention.

Based upon film forming mechanism of PVDF coatings, it is anticipated that the primary particle size of PVDF and the molecular weight of the secondary polymer can significantly affect the performance of the final coating. Since PVDF particles undergo plasticization and mixing with solvent and PMMA, respectively, the development of physical properties during the formation of film is a kinetic process. Initially, the solvent swells and solvates PVDF particles, and eventually the solvated PVDF is mixed with PMMA. It has been found that the uniformity of the mixing depends on the molecular weight of the PMMA.

The present invention relates to effects on the performance of PVDF/PMMA blends of changes in the molecular weight of the PMMA. A typical composition of 70 to 30 of PVDF to acrylic resin is used to demonstrate this invention. The paint coating properties evaluated in the study implemented to demonstrate advantages of the invention include flexibility, hardness, solvent resistance and gloss resistance. The paint coatings were further analysed for weatherability by QUV weatherometer.

It is an object of the present invention to develop a material comprising PVDF and PMMA with use ofPMMA within a particular molecular weight range which provides a paint coating material wich superior physical characteristics, including excellent solvent resistance and gloss retention. Heretofore, it was unknown that a blend of PVDF and PMMA comprising PMMA within a particular molecular weight range affected the physical characteristics of PVDF coatings.

In the drawing:

Figure 1 is a plot of Inherent Viscosity as a function of Molecular Weight for PMMA, and
Figure 2 is a plot of Percent Gloss Retention as a function of Aging Time for four different samples of PVDF/PMMA blends comprising PMMA of various molecular weights and Shepard Blue #3 pigment.

In the following description, the invention is described in terms of a preferred embodiment,but such description should not limit the scope of the invention, which is set forth in the accompanying claims.

PVDF used to demonstrate aspects of the invention is a homopolymer of vinylidene fluoride. PVDF applications generally involve addition of a secondary polymer to enhance the performance of PVDF coating materials. PVDF is compatible with a wide range of polymers such as polymethacrylates, polyacrylates and polyvinyl acetates containing C=O groups in the ester, amide or ketone forms.

PMMA is the most widely used secondary polymer for PVDF applications. PMMA has excellent compatibility with PVDF and provides good heat resistance, mechanical properties, weatherability and optical clarity. PMMA used to demonstrate aspects of this invention is a homopolymer of methyl methacrylate.

In accordance with one aspect of the present invention, it has been found that PVDF coatings with about 30 percent acrylic content in resin compositions provide optimal performance. The present invention is illustrated through use of a PVDF/PMMA blend with 70 weight percent PVDF and 30 weight percent PMMA with the PMMA selected to have different molecular weights. Tests of the present invention demonstrate the effect that the molecular weight of the PMMA has on the PVDF paint coaling performance, particularly with respect to solvent resistance and gloss retention.

Accordingly, blends of PVDF and PMMA with a low molecular weight of about 15,000 grams per mole, a moderate molecular weight of about 120,000 grams per mole and a very high molecular weight of about 1,000,000 grams per mole were prepared and tested for solvent resistance, pencil hardness, gloss-retention, reverse impact, adhesion and accelerated weathering. A blend comprising PVDF and acryloid B-44 resin alloys was also prepared for comparison purposes.

PMMA obtained from suppliers were characterized by inherent viscosity in N-methylpyrrolidone at 30.5°C in order to ensure the molecular weight effect of PMMA on the performance of a PVDF coating. The inherent viscosity is defined by the following equation:

$$\eta_{inh} = \ln(t/t_o)/C$$

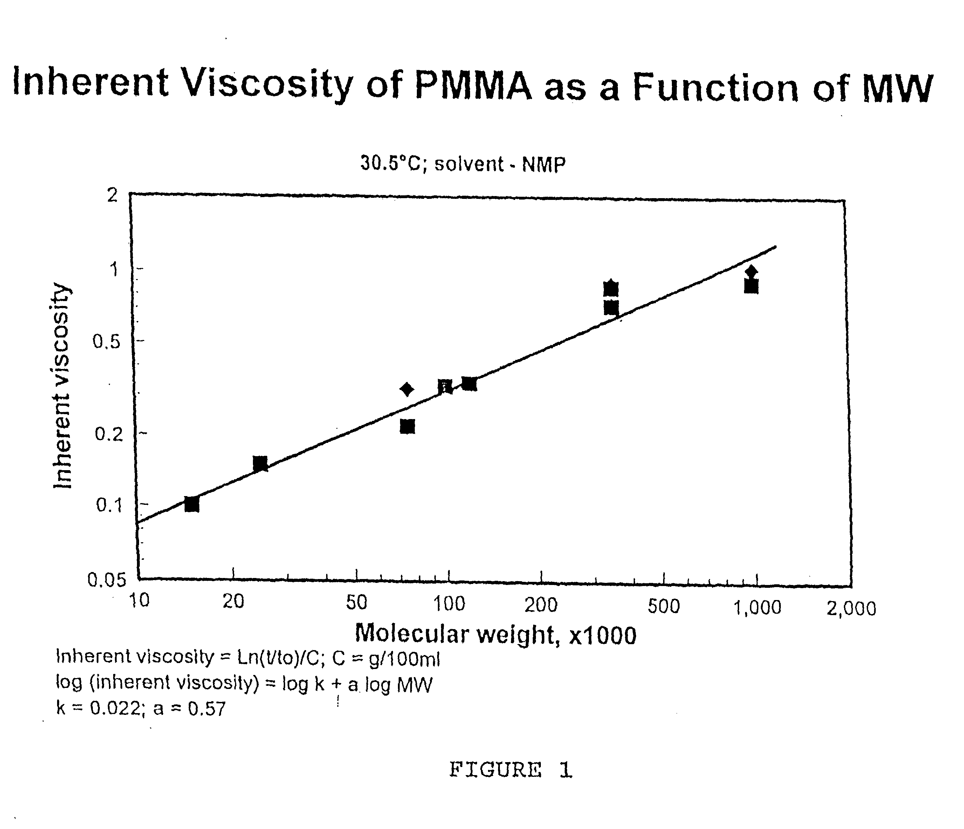

where C is the concentration of PMMA in grams per mole, t and to are flow times of solution and solvent, respectively, in a capillary viscometer. The relationship between the inherent viscosity of and molecular weight determined by experiment are set forth in Figure 1, and may be expressed by the following equation:

$$\log \eta_{inh} = \log K + a(\log MW)$$

where K and a are equal to 0.022 and 0.57, respectively. Based on this experimental result, the molecular weight of the PMMA provided by the supplier is used in the study described herein to demonstrate aspects of the invention.

Example 1 (Comparative)

PMMA solution with a low molecular weight of 15,000 grams per mole was blended in a pigment to form a uniform dispersion and was then homogenized by a sand mill. For purposes of this experiment, two different pigments were used, Titanium Dioxide and Shepard Blue #3. The PMMA pigment dispersions were added to an amount of PVDF appropriate to formulate a mixture containing, by weight, 70 parts PVDF to 30 parts PMMA. The mixture was then further homogenized by a high speed disperser for 15 minutes and then by glass bead shaker for 15 hours to develop the final paint coaling composition. The composition of the paint coatings with PMMA with a molecular weight of 15,000 grams per mole prepared for this study are set forth in Table 1. (See, Experiment Numbers 2 and 6).

The paint coatings were applied onto aluminum substrates and baked to a peak metal temperature of 465° F in one minute. The dry paint coating on the substrate was tested for solvent resistance, pencil hardness, gloss, reverse impact and adhesion. The testing results are set forth in Table 2. (See, Experiment Numbers 2 and 6).

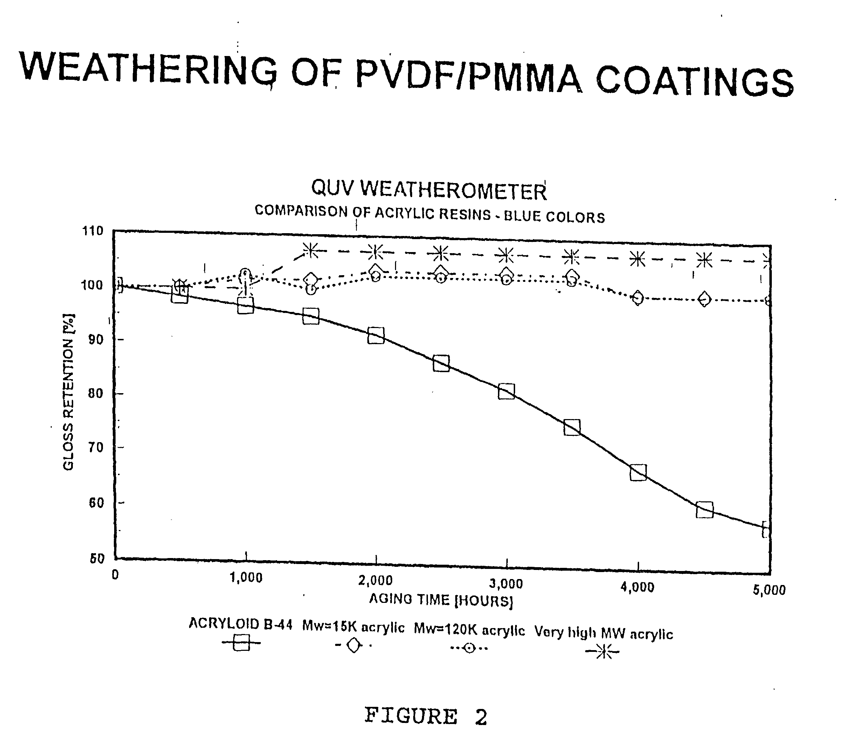

The paint coatings prepared with PMMA with a low molecular weight of 15,000 grams per mole were subjected to accelerated QUV weathering tests using UVB-313 lamps and applying standard test method ASTM D 4329-84. The coating was exposed, at intervals, to 8 hours of UV light at 70°C and 4 hours of condensation at 50°C. The testing interval used to demonstrate this aspect of the invention was every 500 hours for a total testing time of 5,000 hours. The weatherability testing results represented in percentage gloss retention for the paint coating prepared with PMMA with a molecular weight of 15,000 grams per mole and Shepard Blue #3 are described in Figure 2. Similar results were achieved through accelerated QUV weathering tests of paint coatings comprising Titanium Dioxide.

Example 2

Paint coatings, prepared from PMMA with a moderate molecular weight of 120,000 grams per mole, were formulated using the procedure described in Example 1. The compositions of the paint coatings formulated by use of PMMA with a molecular weight of 120,000 grams per mole prepared for this study are set forch in Table 1. (See, Experiment Numbers 3 and 7).

The paint coamings were applied onto an aluminum substrate and baked in accordance with the procedure described in Example 1. The dry coaling was tested for the criteria listed in Example 1. The testing results are set forth in Table 2. (See, Experiment Numbers 3 and 7).

The paint coatings prepared with PMMA with a molecular weight of 120,000 grams per mole were subjected to accelerated QUV weathering tests using the equipment and procedures described in Example 1. The coatings were exposed to the same conditions for UV light and condensation for the same time periods, testing intervals and total testing time described in Example 1. The weatherability testing results represented in percentage gloss retention for the paint coating prepared with PMMA with a molecular weight of 120,000 grams per mole and Shepard Blue #3 are described in Figure 2. Similar results were achieved through QUV weathering tests of paint coatings comprising Titanium Dioxide.

Example 3 (Comparative)

Paint coatings, prepared from PMMA with a very high molecular weight of 1,000,000 grams per mole were formulated using the procedure described in Example 1. The composition of the paints formulated by use of PMMA with a molecular weight of 1,000,000 grams per mole prepared for this study are set forth in Table 1. (See, Experiment Numbers 4 and 8).

The paint coatings were applied onto an aluminum substrate and baked in accordance with the procedure described in Example 1. The dry coating was tested for the criteria listed in Example 1. The testing results are set forth in Table 2. (See, Experiment Numbers 4 and 8).

The paint coatings prepared with PMMA with a molecular weight of 1,000,000 grams per mole were subjected to accelerated QUV weathering tests using the equipment and procedures described in Example 1. The coatings were exposed to the conditions for UV light and condensation for the time periods, testing intervals and total testing time described in Example 1. The weatherability testing results represented in percentage gloss retention for the paint coating prepared with PMMA with a molecular weight of 1,003,000 grams per mole and Shepard Blue #3 are described in Figure 2. Similar results were achieved through QUV weathering tests ofpaint coatings comprising Titanium Dioxide.

Example 4 (Comparative)

Paint coatings, prepared from Acryloid B-44 acrylic resin, were formulated for comparison purposes using the procedure described in Example 1. The composition of the paints formulated by use of Acryloid B-44 acrylic prepared for this study are set forth in Table 1. (See, Experiment Numbers 1 and 4).

The paint coatings were applied onto an aluminum substrate and baked in accordance with the procedure described in Example 1. The dry coating was tested for the criteria listed in Example 1. The testing results are set forth in Table 2. (See, Experiment Numbers 1 and 4).

The paint coatings prepared with Acryloid B-44 were subjected to accelerated QUV weathering tests using the equipment and procedures described in Example 1. The coatings were exposed to the conditions for UV light and condensation for the time periods, testing intervals and total testing time described in Example 1. The weatherability testing results represented in percentage gloss retention for the paint coating prepared with Acryloid B-44 resin and Shepard Blue #3 are described in Figure 2. Similar results were achieved through QUV weathering tests of paint coatings comprising Titanium Dioxide.

Table 1

| Compositions of PVDF paints used in the study. | | | | | | | | |
|---|---|---|---|---|---|---|---|---|
| Experiment Number | 1 | 2 | 3 | 4 | 5 | 6 | 7 | 8 |
| PVDF,phr | 100 | 100 | 100 | 100 | 100 | 100 | 100 | 100 |
| Film Forming Resins, phr | | | | | | | | |
| Acryloid B44 acrylic<br>15,00 MW PMMA | 42.85 | 42.85 | | | 42.85 | 42.85 | | |

Table 1   (continued)

| Compositions of PVDF paints used in the study. | | | | | | | | |
|---|---|---|---|---|---|---|---|---|
| Experiment Number | 1 | 2 | 3 | 4 | 5 | 6 | 7 | 8 |
| 120,000 MW PMMA | | | 42.85 | | | | 42.85 | |
| 1,000,000 MW PMMA | | | | 42.85 | | | | 42.85 |
| Solvent | | | | | | | | |
| Isophorone | 180 | 180 | 180 | 180 | 105 | 105 | 105 | 120 |
| Methyl ethyl ketone | 99.96 | 99.96 | 99.96 | 171.40 | 99.96 | 99.96 | 99.96 | 171.40 |
| Pigment, phr | | | | | | | | |
| $TiO_2$ | 78.60 | 78.60 | 78.60 | 78.60 | | | | |
| Shepard Blue #3 | | | | | 42.85 | 42.85 | 42.85 | 42.85 |
| Solid content. Wt% | 44.17 | 44.17 | 44.17 | 38.66 | 36.57 | 36.57 | 36.57 | 29.94 |
| Pigment/Binder | 0.55 | 0.55 | 0.55 | 0.55 | 0.30 | 0.30 | 0.30 | 0.30 |
| phr - parts per hundred parts PVDF | | | | | | | | |

Table 2

| Molecular weight effect of PMMA on PVDF coating performance. | | | | | | | | |
|---|---|---|---|---|---|---|---|---|
| Experimental Number | 1 | 2 | 3 | 4 | 5 | 6 | 7 | 8 |
| MEK *Double Rubs* | *110* | *30* | *200* | *20* | *145* | *42* | *166* | *30* |
| Pencil Hardness | H | H | H | H | H | H | H | H |
| Adhesion | 100% | 100% | 100% | 100% | 100% | 100% | 100% | 100% |
| OT Flexibility | NTO | NTO | NTO | NTO | NTO | NTO | NTO | NTO |
| Reverse Impact/#80 | >80 | >80 | >80 | >80 | >80 | >80 | >80 | >80 |
| *Gloss-60 deg.* | *61.00* | *62.80* | *56.50* | *34.00* | *62.80* | *55.80* | *39.40* | *14.80* |
| DFT/Mils | 0.85 | 0.85 | 0.85 | 0.85 | 0.85 | 0.85 | 0.85 | 0.85 |
| NTO - No tape off. DFT - Dry film thickness. | | | | | | | | |

## DISCUSSION OF THE RESULTS

Table 2 shows the effect of molecular weight of PMMA on the performance of typical PVDF coatings. The gloss of the coating decreases with increased molecular weight which is likely the result of a decreased degree of homogenous mixing and the reduced flowability of the resin mixture. The solvent resistance, measured by methyl-ethyl ketone ("MEK") double rubs, is, however, poorer for blends with both low and high molecular weight PMMA as compared to blends comprising moderate molecular weight PMMA. The results disclose that paint coatings comprising PMMA with a moderate molecular weight of 120,000 grams per mole provide excellent solvent resistance to MEK double rubs. This formulation scored significantly better than the paints formulated with PMMA of very low and very high molecular weights.

The samples were also analyzed for pencil hardness, adhesion, OT flexibility, reverse impact and dry film thickness. As set forth in Table 2, the differences in molecular weight of the PMMA used in the paint coatings formulated to demonstrate the invention did not dramatically affect these characteristics.

The gloss retention results after QUV weatherometer tests are described in Figure 2. The gloss of the paint coating comprising Acryloid B-44 resin is reduced gradually upon QUV exposure and ultimately the gloss recension levels off after long exposure. Interestingly, equivalent paint coatings that substitute PMMA for Acryloid B-44 resin do not exhibit significant change in gloss reduction. The percentage of gloss reduction for the coatings studied to demonstrate aspects of the invention can be explained by the differences in photo oxidative degradation of the Acryloid B-44 and PMMA by the QUV exposure conditions. Standard thermogravimetric analyses were applied to the samples which indicate about 70 percent by weight degradation of Acryloid B-44 in paint coatings comprising Acryloid B-44 after 5,000 hours of UV exposure. The paint coatings comprising PMMA, however, exhibited only a small weight percentage of PMMA degradation after 5,000 hours of exposure and the weight percent degradation decreased as the molecular weight of the PMMA in the studied blends increased Hence, it appears that the most likely significant factor contributing to the decrease of gloss of the paint coatings upon weathering is the generation of free radicals by UV light through photoxidation of Acryloid B-44 and PMMA in the blends.

The experiments disclose that, surprisingly, there is a range of molecular weight for PMMA that can be used in a blend comprising PVDF and PMMA that provides for optimal performance in this regard. The molecular weight range of PMMA disclosed through the experiments is between 25,000 grams per mole and 200, 000 grams per mole. Previously, it was unknown that there is a preferred molecular weight range of PMMA in blends of PVDF and PMMA.

While the invention has been described in terms of a preferred embodiment, the scope of the invention is set forth as the following claims.

## Claims

1. A coating composition exhibiting enhanced properties, including solvent resistance and gloss retention, comprising a homopolymer of vinylidene fluoride and a homopolymer of methyl methacrylate wherein the polymethyl methacrylate has a molecular weight in the range of 25,000 grams per mole to 200,000 grams per mole.

2. The coating composition of claim 1 wherein said polymethyl methacrylate has a molecular weight of about 120,000 grams per mole.

3. The coating composition of claim 1 further comprising solvent.

4. The coating composition of claim 1 wherein said solvent is isophorone or methyl ethyl-ketone.

5. The coating composition of claim 1 further comprising pigment.

6. The coating composition of claim 1 wherein said pigment is selected from the group consisting of titanium dioxide and Shepard Blue #3.

7. The coating composition of claim 1 further comprising binder.

8. The composition according to claim 1 for use as a weather resistant coating.

9. Use of the composition according to claims 1-7 for coatings.

## Patentansprüche

1. Eine Beschichtungszusammensetzung, die verbesserte Eigenschaften zeigt, einschließlich der Widerstandsfähigkeit gegenüber Lösungsmitteln und Lackretention, enthaltend ein Homopolymer aus Vinylidenfluorid und ein Homopolymer aus Methylmethacrylat, wobei das Polymethylmethacrylat ein Molekulargewicht im Bereich von 25 000 Gramm pro Mol bis 200 000 Gramm pro Mol hat.

2. Die Beschichtungszusammensetzung nach Anspruch 1, wobei besagtes Polymethylmethacrylat ein Molekulargewicht von etwa 120 000 Gramm pro Mol hat.

3. Die Beschichtungszusammensetzung nach Anspruch 1, welche weiterhin ein Lösungsmittel enthält.

4. Die Beschichtungszusammensetzung nach Anspruch 1, wobei besagtes Lösungsmittel Isophoron oder Methylethylketon ist

5. Die Beschichtungszusammensetzung nach Anspruch 1, welche weiterhin ein Pigment enthält.

6. Die Beschichtungszusammensetzung nach Anspruch 1, wobei besagtes Pigment ausgewählt ist aus der Gruppe bestehend aus Titandioxid und Shepards Blau #3.

7. Die Beschichtungszusammensetzung nach Anspruch 1, welche weiterhin ein Bindemittel enthält.

8. Die Beschichtungszusammensetzung nach Anspruch 1 zur Verwendung als wetterbeständige Beschichtung.

9. Verwendung einer Zusammensetzung nach einem der Ansprüche 1-7 für Heschichtungen.

**Revendications**

1. Composition de revêtement présentant des propriétés améliorées, comprenant la résistance au solvant et la conservation de brillant, comprenant un homopolymère de fluorure de vinylidène et un homopolymère de méthacrylate de méthyle, dans laquelle le polyméthacrylate de méthyle a une masse moléculaire dans la gamme de 25 000 grammes par mole à 200 000 grammes par mole.

2. Composition de revêtement selon la revendication 1, dans laquelle ledit polyméthacrylate de méthyle a une masse moléculaire d'environ 120 000 grammes par mole.

3. Composition de revêtement selon la revendication 1, comprenant en outre un solvant.

4. Composition de revêtement selon la revendication 1, dans laquelle ledit solvant est l'isophorone ou la méthyléthylcétone.

5. Composition de revêtement selon la revendication 1, comprenant en outre un pigment.

6. Composition de revêtement selon la revendication 1, dans laquelle ledit pigment est choisi dans le groupe constitué par le dioxyde de titane et le bleu Shepard #3.

7. Composition de revêtement selon la revendication 1, comprenant en outre un liant.

8. Composition selon la revendication 1, pour une utilisation en tant que revêtement résistant aux intempéries.

9. Utilisation de la composition selon les revendications 1 à 7 pour des revêtements.

# Inherent Viscosity of PMMA as a Function of MW

30.5°C; solvent - NMP

Inherent viscosity = Ln(t/to)/C; C = g/100ml
log (inherent viscosity) = log k + a log MW
k = 0.022; a = 0.57

FIGURE 1

# WEATHERING OF PVDF/PMMA COATINGS

QUV WEATHEROMETER

COMPARISON OF ACRYLIC RESINS - BLUE COLORS

ACRYLOID B-44   Mw=15K acrylic   Mw=120K acrylic   Very high MW acrylic

FIGURE 2